# EUROPEAN PATENT APPLICATION

(11) **EP 2 980 724 A1**
(43) Date of publication of application: **03.02.2016**
(21) Application number: 14306219.8
(22) Date of filing: 31.07.2014
(51) Int. Cl.: G06F 21/62, H04L 29/06

(54) **Method to handle sensitive resources**

(71) Applicant: Gemalto SA, 92190 Meudon (FR)
(72) Inventor: Gautier, Steven, 13881 Gemenos Cedex (FR); Lambert, Patrick, 13881 Gemenos Cedex (FR); Chretien, Stéphane, 13881 Gemenos Cedex (FR); Paillart, Frédéric, 13881 Gemenos Cedex (FR); Delhoste, Fabrice, 13881 Gemenos Cedex (FR); Girard, Mickael, 13881 Gemenos Cedex (FR)

(57) **Abstract**

The present invention relates to a method and a secure device having limited resources to handle sensitive resources inside the secure device (HSM), said method comprising the preliminary steps of implementing a predetermined number of generic functions (GenF) in the secure device (HSM) and of loading a realm configuration (RC), said realm configuration (RC) being intended to be used by said generic functions (GenF), said realm configuration (RC) describing:
- subjects (<who>, M, US),
- sensitive resources (<what>, CC_nb, PIN) associated to said subjects (<who>),
- actions (<action>) intended to be applied by subjects (<who>, M) on sensitive resources (<what>, CC_nb) and defined from said generic functions (GenF),
- authentication conditions (<how>) associated to said actions (<action>) and to be validated using a secure device's algorithm (algorithm) dealing with at least one sensitive resource (<what>, PIN).

## Description

### FIELD OF THE INVENTION

The present invention relates to a method to handle sensitive resources using a secure device having limited resources. The aim of the invention is to secure business data interaction through a secure device. The invention particularly applies to real time payment solution, and especially to smart-phone payment avoiding card provider fees.

The invention also pertains to a secure device using said method.

### BACKGROUND OF THE INVENTION

Each business potentially concerned by real time payment solution can have its own subjects which are defined by one or several sets of resources.

Currently, applications supported by secure device of the Hardware Security Module (HSM) kind are developed as soon as there is no existing function within an existing library of functions. This implies a great amount of specific applications to be developed to implement specific functions. This is time consuming in terms of development and it can lead to an overload of the HSM in term of memory. Highly secure modules are thus excluded from the possibility to handle a great amount of data in complex and multiple environments.

Further alternative and advantageous solutions would, accordingly, be desirable in the art.

### SUMMARY OF THE INVENTION

The present invention aims at proposing a solution allowing access to sensitive resources while being flexible to define access rules and remaining secure.

The present invention is defined, in its broadest sense, as a method to handle sensitive resources inside a secure device having limited resources, said method comprising the preliminary steps of implementing a predetermined number of generic functions in the secure device and of loading a realm configuration, said realm configuration being intended to be used by said generic functions, said realm configuration describing:
- subjects,
- sensitive resources associated to said subjects,
- actions intended to be applied by subjects on sensitive resources and defined from said generic functions,
- authentication conditions associated to said actions and to be validated using a secure device's algorithm dealing with at least one sensitive resource,
said actions enforcing sensitive resources to be handled on behalf of subjects only in case said authentication conditions are fulfilled,
said sensitive resources being further handled outside the secure device in secure blocks protected by a secret key of the secure device, said secure blocks being created, updated and accessed through the secure device on behalf of subjects only using generic functions according to the realm configuration under authentication conditions.

The invention enables that all the data can be securely stored outside the secure device through the use of secure blocks constructed according to the realm configuration. Integrity is ensured through the use of signatures inside the secure blocks.

With the invention, a subject is representing an individual or a device associated to this individual and is defined by a set of resources. These resources can have different uses:
- Resources that are involved in rules definitions,
- Resources that are protected by rules.

Resources can be data, including credentials (subject name, login, phone number, PIN code, password etc), and can represent devices to be accessed or used, software etc. The invention enables to apply rules, stored in the realm configuration inside a secure device (HSM), to resources depending on the business needs.

Subjects can be categorized in terms of hierarchy (ownership, group, family, etc...). Rules can apply to this hierarchy by using resources.

According to an advantageous feature, said secret key is diversified by subject.

This feature enables to have totally independent subject blocks, the access of which being strongly protected.

According to a particular implementation, said realm configuration further defines a subject hierarchy, validation of said authentication conditions further depending on the subject hierarchy.

This implementation enables to make the access to resources dependent from such a hierarchy. Resources are managed by subject defined in subject profiles and access conditions to those resources are depending from subject authentication and authentication method.

In a preferred embodiment, said generic functions are the following: get ressource, create subject block, update resource.

Those generic functions are the simplest ones enabling to process all the necessary operations enabling the functioning of the access management according to the invention.

Advantageously, said secure device is an HSM. The invention indeed totally fits to this context where a hardware security is provided but at the expense of resources inside the secure device. The invention enables to develop solutions for large scale access management while relying on the security provided by the HSM.

In another implementation, said secure device is a TEE. The invention enables in this context to lower the size of the TEE while relying on its security properties in comparison with a TEE where functions/operations would have been custom developed as it is today the case.

According to a particular feature, said sensitive resources are chosen among the group constituted by accesses to devices, data, code resources.

According to a realization of the invention, the realm configuration is stored in a realm block protected by the secure device.

This realization consists in gathering the realm rules inside a dedicated realm block protected by the secure device. The realm block is advantageously secured and stored inside the secure device for optimization purpose. It is thus pushed inside the secure device, typically during a key ceremony. However the realm block can also be stored outside the secure device.

According to a specific embodiment, said secure blocks are protected by at least two symmetrical keys, an encryption key and an integrity key.

This embodiment enables the integrity of each secure block to be checked while relying on the security provided by the use of secret keys of the secure device. Advantageously those keys are both diversified on a subject basis.

Thus advantageously, said secure blocks are protected by at least two symmetrical keys, an encryption key and an integrity keys, said keys being diversified for each subjects as defined in the realm configuration.

According to a particular feature of the invention, said secure blocks are transient, generated on the fly according to the realm configuration and then deleted after use.

An on-the-fly generation enables to avoid the secure block to be forged. A secure block can only be created by the secure device that holds the realm configuration. The creation of a transient secure block from the realm configuration will be triggered only after a beforehand authentication of the entity asking for this creation according to the requirements in the realm configuration.

The realm configuration does not contain data but a logical representation of subjects, ressources, groupe access control, etc... The transient secure blocks are useful for intermediate state, as temporary autorisation to modify a resource, for example in the case of an OTP.

According to a particular feature, said secure device's algorithm deals with several sensitive resources of different kinds.

This feature allows to gather resources into application usage, for example, data, credential, personal data (private etc..).

The present invention also relates to a secure device adapted to handle sensitive resources and having a predetermined number of generic functions and a realm configuration, said realm configuration being intended to be used by said generic functions, said realm configuration describing:
- subjects,
- sensitive resources associated to said subjects,
- actions intended to be applied by subjects on sensitive resources and defined from said generic functions,
- authentication conditions associated to said actions and to be validated using a secure device's algorithm dealing with at least one sensitive resource,
said actions enforcing sensitive resources to be handled on behalf of subjects only in case said authentication conditions are fulfilled,
said secure device handling sensitive resources stored outside the secure device in secure blocks created, updated and accessed by the secure device and protected by a secret key of the secure device, said handling of sensitive resources being processed by the secure device on behalf of subjects only using generic functions according to the realm configuration under authentication conditions.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed.
- Figure 1 shows an environment in which the invention is intended to be implemented;
- Figure 2 schematically shows the functioning of the invention in an exemplary application;
- Figure 3 schematically shows a realm block as generated according to a realm configuration of the invention;
- Figure 4 schematically shows a subject secure block of the invention;
- Figure 5 schematically represents the subjects as defined in a realm configuration of the invention;
- Figure 6 schematically shows an example of application of the invention.

### DETAILED DESCRIPTION OF EMBODIMENTS OF THE INVENTION

The same elements have been designated with the same reference numerals in the different drawings. For clarity, only those elements and steps which are useful to the understanding of the present invention have been shown in the drawings and will be described.

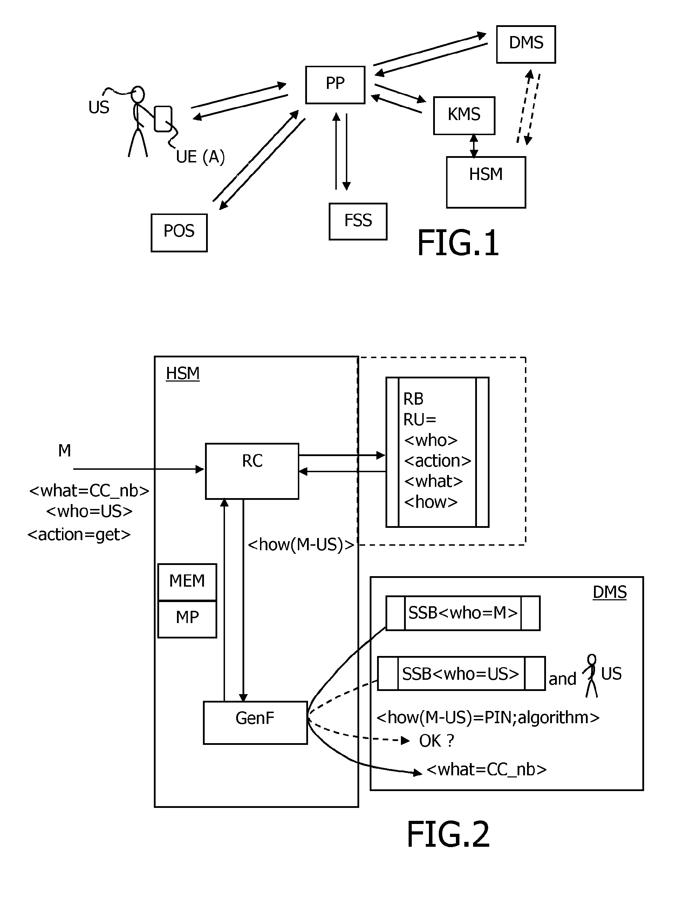

FIG. 1 schematically shows an exemplary environment in which the invention is intended to be implemented. This environment comprises a payment platform PP exchanging with several peripheral entities. In the presented example, these peripheral entities comprises a user equipment UE manipulated by a user US, a point of sale POS, a financial service server FSS, a data mass storage DMS, a key management service KMS, linked to a secure device, here a hardware security module HSM.

The invention proposes to secure the exchanges between the different entities using the HSM and the data mass storage DB.

Figure 2 shows schematically the functioning of the invention around a hardware security module HSM of the invention. Such HSM typically comprises a memory MEM and local processor MP. The invention relies on generic functions GenF available in the HSM and on a realm configuration RC describing a realm for which further data are advantageously stored in the data mass storage DMS, schematically represented by dotted line on figure 2. It is noted that a single mass storage is here represented. However several mass storage units will in practice more likely be used without departing from the invention. For example, typically, diverse and several web mass storages can be used.

Classically HSM are intended to perform cryptographic functions. Their functions are limited to this. Some HSM have however a limited amount of free resources susceptible to be programmed or to store data, typically a custom firmware.

The invention targets this last kind of HSM where a minimal personalization can be implemented. The invention proposes to personalize the HSM by implementing a limited number of basic functions working in combination with a loaded realm configuration in order to drastically enhance the processing and application capacity of the existing HSM. As the use of a limited number of basic functions and of a loaded realm configuration does not require great amount of resources, the HSM has enlarged functions well above what could be expected from its own resources.

The HSM of the invention is such that it exports data created from the realm configuration in data mass storage DMS. It creates for this purpose secure blocks comprising such data. This capacity drastically enhances the processing ability of the HSM and the quantity of data it can process.

Secure blocks are created according to rules defined in the realm configuration. In an advantageous embodiment, the realm configuration is stored in the HSM, secure device, as a realm block. This realm block can be stored in an external storage after protection by the HSM that will verify its integrity as often as necessary but will be preferably be loaded and stored inside the HSM for optimal performance.

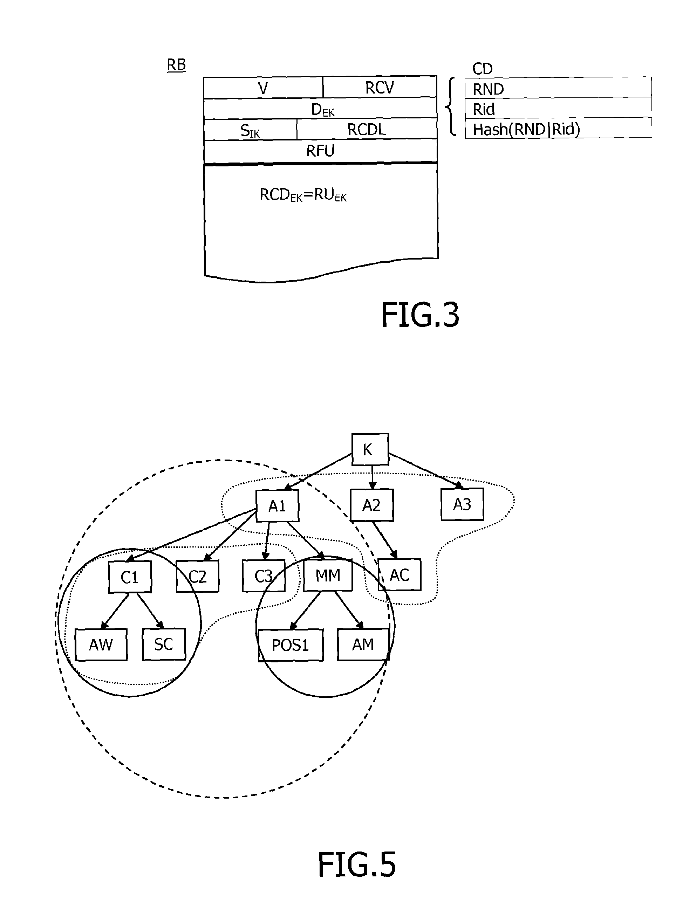

Figure 3 shows schematically such an exemplary realm block RB. It is here noted that other realization can implement other forms for storing the realm configuration in the HSM.

The exemplary block RB includes a version of the block V, a realm configuration version RCV and some space reserved for further use RFU.

More specifically, it comprises a set of encrypted data D_{EK}, a signature S_{IK}, encrypted realm configuration data RCD_{EK} and a realm configuration data length RCDL.

As shown on figure 3, clear data CD as encrypted in D_{EK} are typically constituted with a random RND and a realm identifier Rid and a hash of these two last data. In the realm block RB, those clear data CD are encrypted using an encryption key EK which is a secret key of the secure device.

Signature S_{IK} is obtained from the entire realm block and using a dedicated integrity key IK of the secure device (typically a realm MAC key). The signature enables to check the integrity of the realm configuration data RCD.

The realm configuration data RCD_{EK} stored in the realm block RB are typically rules RU associated to a given action that can be required by a subject of the realm or a type of subjects of the realm, in the case such types are defined in the realm configuration. The realm block is advantageously shared by several secure devices in order to make the solution scalable by storing the encryption key in the key management system and therefore by transmitting it to each secure device. It is typically pushed inside secure device during a key ceremony. Keys derived from the encryption keys can also be used.

It is here noted that new rules or new subjects to be inserted in the environment managed by the HSM only needs some inputs in the realm configuration block. In practice, a short number of lines will have to be added in the realm block in order to modify a rule or to add a subject. This is a very important advantage of the invention.

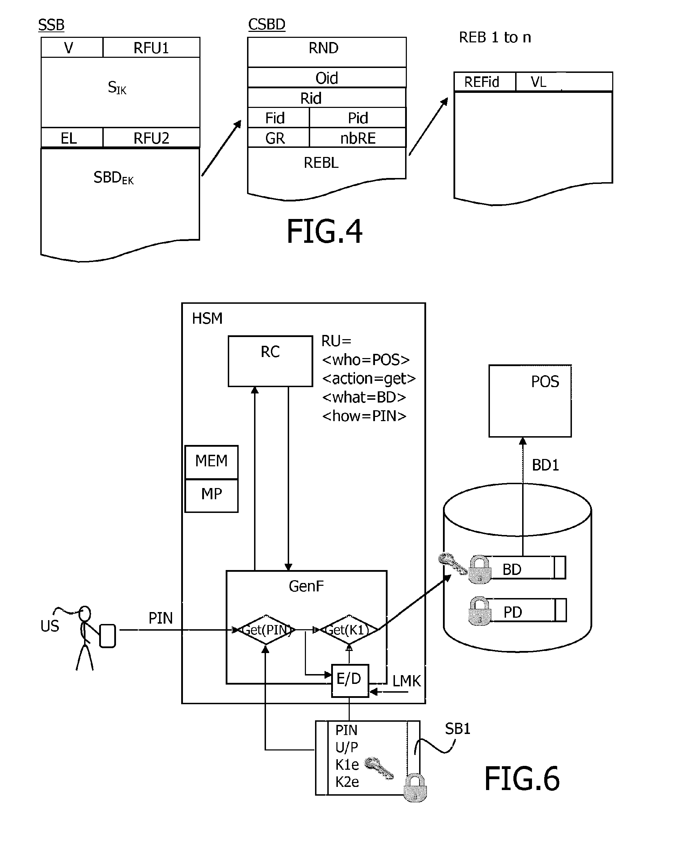

Figure 4 shows a subject secure block SSB of the invention. A subject can be a user, a user browser, an administrator, a device, for example a payment terminal. Such subject secure blocks are intended to be exported to a mass storage, typically in the cloud. Subject blocks are created using generic functions of the secure device. The possibility to create such subject blocks enables to enlarge the processing capacity of the secure device as much as desired without requiring huge amount of resources inside the secure device itself.

According to the invention, the creation and the update of such subject secure blocks and the access to such subject secure blocks are performed by the secure device on behalf of subjects.

Subject secure blocks comprise resources to be accessed, and thus protected by rules defined in the realm configuration, and resources used in the definition of rules inside the realm configuration.

In the proposed illustrative example, the subject secure block SSB comprises a version of the secure block V, a signature S_{IK} to enable to check the integrity of the data, an information on the length of the encrypted data EL and some space reserved for further use RFU1 and RFU2.

It further comprises encrypted secure block data SBD_{EK}. The encryption is done using an encryption key EK of the secure device. Advantageously the used encryption keys are diversified for each of the subjects.

More generally, it is here noted that encryption keys EK are advantageously diversified depending on the encrypted data. This feature is not disclosed here in details. Any kind of diversification method known by the man skilled in the art could be used to implement a diversification of the integrity key. Thus, even if a single reference EK is used to represent the encryption of data on the figures, it is here noted that encryption keys EK are all keys belonging to the secure device but can be different. As encryption keys, integrity keys can also be diversified.

In the illustrative example, clear data CSBD comprises a random RND, an ownership identifier Oid, the realm configuration identifier Rid, a family identifier Fid and a type identifier Pid. The role of the random RND is typically to avoid attacker to have an idea of the Oid value or Rid value. If a RND of 16 bytes was not added then all the subject secure blocks will have 32 bytes and all those block will be identical. That can give information to an attacker to break the security. The type identifier indicates the subject type which is represented by this secure block. For example, if, in the realm configuration, a customer was define with the PID = 1. Then if Pid=1 then it will represent a customer.

At last, a group GR is also comprised in the clear data CSBD and a number of resources nbRE. The number of resources nbRE gives the number of resource block REBL in the remaining part of the clear data CSBD. Then a list of resource block REBL is thus inserted in the clear data CSBD.

Each resource block REB in the list REBL comprises a reference identifier REFid, a length of the value VL and at last a value for the resource VR. For example, the reference identifier REFid is "password" and the value of the resource is "xxx" as input by the user.

Generic functions are advantageously the followings: create subject secure block, update resource, get resource. For all these functions, the realm configuration lists rules to be applied.

Figure 5 is a representation of a realm configuration of the invention. This realm configuration is advantageously based on a hierarchy and on constitution of groups, families and ownerships. It has here to be noted that this figure is only illustrative. The possibilities for a realm configuration are unlimited and subject blocks can be regrouped to as many groups as needed. A king K corresponds to the realm configuration as identified by the identifier Rid, this identifier Rid being shared by all the subjects as represented on figure 5. The king K is the first subject block that will create the subsequent secure block. The subject block king K is generated when the Realm Block is created during an initiation phase.

Then there are several administrators A1, A2 and A3 belonging to a first group of subjects of a same type and at a first level. This group is represented inside a dotted line circle. Group is a static notion that can gather subjects of different types. Here for example a web application dedicated to the platform management and called Administration Care AC owned by administrator A2 is belonging to the group of the administrators. Only administrators are authorized to connect to this application.

Another group is formed by subjects of the "customers" type: C1, C2 and C3 with what is own by these subjects. A customer is here typically a user.

Ownerships are defined in solid line circles. Here a customer subject C1 created by the administrator subject A1 owns an application wallet subject AW and a SelfCare subject SC also belonging to the group. The SelfCare subject correspond to an end user application necessitating the authentication of the customer before connection. Customer C1, application wallet AW and selfcare SC are forming an ownership represented inside a solid line circle. A subject owned by a subject belonging to a group will inherit of this group. The role of the ownership depends on the realm configuration which defines which subjects are to be owned or those which will be owned.

Administrator A1 also created a Merchant Manager subject MM which owns a point of sale subject POS1 and a Merchant application subject MA.

The subject type, here administrator, refers to specific rules inside the realm configuration which are useful for the creation of the subject. A subject is created under a type format, for example customer type, administrator type, device type, application type. The corresponding secure block contains a profile identifier enabling to link the secure block and its definition/description in the realm block defining the realm configuration. The secure block type information and thus the subject type information is thus kept by this profile identifier.

The "subject type" notion does not remain in the subject secure block as it is not useful anymore. It enables to apply a certain format to the listed resources. For example a customer subject will have a user name and a password as resources. Other resources can also be implicated as PIN, MSISDN, secret answer...

Under the merchant manager MM are a point of sale POS1 and an application merchant AM. These three entities are also forming an ownership.

In order to proceed to modification on a given subject, rules will be defined in the realm configuration inside the realm block stored in the secure device.

Administrator A1 and all entities below it are forming a family represented inside a dashed line on figure 4. The family notion is an additional notion to avoid interaction between the administrator A2 and any one of the subjects under administrator A1.

Rules are defined depending on the family identifiers Fid, on the ownership identifiers Oid, on the groups GR of the requestor subject and of the requested subject.

In the following is given an illustrative example of use of the invention also illustrated on figure 2. A given subject, for example a merchant M, require to get <action=get> a given resource, for example a credit card number <what=CC_nb>, from a given requested subject, for example an application having a subject secure block SSB<who=A>. In this case, corresponding rule RU is consulted in the realm configuration RC (advantageously stored in a realm configuration block as disclosed on figure 3) in order to know the requirement for merchant M to get resource in subject US <how(M-US)>.

In rule RU, it is required that the subject user US gives its personal identification number PIN <how=PIN;algorithm>. The subject secure block of the user US SSB<who=US> is thus consulted to retrieve the value of the PIN from the resources and to enable the secure device HSM to check it. Once the PIN is entered by the user US, it is checked by the secure device HSM. This checked is represented by a dashed line. Once the check is OK, the merchant M get the resource from the subject secure block SSB<who=A>.

The role of the secure device HSM is to apply the rules as listed in the realm configuration for such an access. Here the HSM uses an interface with the user US to check the PIN. The interface could be for example a point of sale POS1 managed by a given administrator or a mobile device of the user US. Said point of sale and mobile device are also defined as subject in the realm configuration. Their POS resources are token and token secret.

It is here underlined that the invention is such that the secure device only has central functional tasks GenF and calls external secure block's contents depending on the rules defined in the realm configuration RC.

Other action "update resource" is typically used when the user US wants to change its PIN for example. In this case only one subject block is concerned.

Other action "create subject blocks" enables to enlarge the processing capacity of the secure device. Any subject can be authorized to create subject block. For example a customer/user want to create a subject block for a mobile device of his/her own. The corresponding subject secure block will belong to the same ownership as this customer. Such a creation can require, according to rules in the realm configuration, a preliminary action implicating an administrator secure block.

Creation of subject secure block can also be done while creating a new ownership. It would for example be the case when an administrator creates a subject secure blocks for a customer/user.

Today, data storages are subject to security threats such as SQL injection to try to corrupt or steal data, data export and backup, data hosted at an external site, database or file-system weaknesses. There are plenty of ways to protect data storage by full database or file-system encryption. However, full encryption poorly tackles this topic. It does not offer good level of data separation to avoid leaks. On the other hand, access controls are often implemented in software and generally do not involve encryption.

The invention enables to provide custom data encryption through HSM. The invention also enables access controls to data separated from each other to make data private to an entity (a user, an application ...). It provides a way of protecting user or application's data in a flexible access controlled environment while preserving data security through efficient encryption.

In the example given below in reference to figure 6, every data have its own security: every kind of data can be encrypted under their own secret associated to a specific authentication (of a user, an application...).

For the given example, banking account data BD are encrypted under key K1 and require PIN authentication by the user to be decrypted whereas personal data PD such as address of a customer can be encrypted under key K2 and require login/password U/P authentication.

Advantageously, with the invention, such rules are defined as a policy in the realm configuration. On figure 6, only one rule RU is shown. It consists in the access "get" to the banking data BD by a point-of-sale POS. The requirement to access it is to make the user US of the corresponding banking account enter his/her PIN code.

It is here thus defined a method to protect data using a central secure device, each data being encrypted using its own secret and stored outside the central secure device in a cloud mass storage server, this own secret being also stored outside the central secure device in a cloud mass storage server encrypted using a secret encryption key of the central secure device, the access to this secret being conditioned by a specific authentication of an owner of the data with the central secure device.

It is here accessorily noted that such a method of partitioning storage with different keys could be implemented independently from the use of a realm configuration.

The policy is enforced and protected through the use of a secure environment of the HSM kind. Keys K1 and K2 are software keys but they can only be extracted through HSM by proving first the authentication as advantageously disclosed in a corresponding rule RU. Advantageously, keys K1 and K2 are encrypted through an encryption chain leading to a safe HSM LMK (local master key) which is used. If the PIN is correctly entered in a step Get(PIN), and only depending on that condition, K1 is extracted Get(K1) in clear using cryptographic means E/D and then used to encrypt/decrypt the data BD. Once done, key K1 is erased from application memory, leaving minimum surface to an attacker. The same is performed to access the data PD but with the acquisition of user/password U/P resource.

Therefore, it allows encrypting differently and efficiently every piece of data to be hosted into a database or file-system while authorizing access to this data depending on how the accessor or the owner is authenticated.

The authentication part is made onto the HSM or secure device. Data encryption/decryption advantageously still occurs in software for performance reasons on high volume of data.

Thus, for instance, when a customer didn't use his/her banking account for 6 months, it would be impossible to get the clear data out of the database for example by SQL injection because the keys protecting this data are encrypted through HSM and stored externally in mass storage from which they could only be extracted by first proving the PIN to the HSM.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted, along with the full range of equivalents to which the claims are entitled.

## Claims

1. Method to handle sensitive resources inside a secure device (HSM) having limited resources, said method comprising the preliminary steps of implementing a predetermined number of generic functions (GenF) in the secure device (HSM) and of loading a realm configuration (RC), said realm configuration (RC) being intended to be used by said generic functions (GenF), said realm configuration (RC) describing:
- subjects (<who>, M, US),
- sensitive resources (<what>, CC_nb, PIN) associated to said subjects (<who>),
- actions (<action>) intended to be applied by subjects (<who>, M) on sensitive resources (<what>, CC_nb) and defined from said generic functions (GenF),
- authentication conditions (<how>) associated to said actions (<action>) and to be validated using a secure device's algorithm (algorithm) dealing with at least one sensitive resource (<what>, PIN),
said actions (<action>) enforcing sensitive resources (<what>, CC_nb) to be handled on behalf of subjects (<who>, M) only in case said authentication conditions (<how>) are fulfilled,
said sensitive resources (<what>) being further handled outside the secure device (HSM) in secure blocks (SSB) protected by a secret key of the secure device (HSM), said secure blocks (SSB) being created, updated and accessed through the secure device (HSM) on behalf of subjects (M, US) only using generic functions (GenF) according to the realm configuration (RC) under authentication conditions (<how>).

2. Method according to claim 1, wherein said secret key is diversified by subject.

3. Method according to claim 1, wherein said realm configuration (RC) further defines a subject hierarchy, validation of said authentication conditions (<how>) further depending on the subject hierarchy.

4. Method according to claim 1, wherein said generic functions (GenF) are at least the following: get ressource, create subject block, update resource.

5. Method according to claim 1, wherein said secure device is an HSM.

6. Method according to claim 1, wherein said secure device is a TEE.

7. Method according to claim 1, wherein said sensitive resources are chosen among the group constituted by accesses to devices, data, code resources.

8. Method according to claim 1, wherein the realm configuration (RC) is stored in a realm block (RB) protected by the secure device (HSM).

9. Method according to claim 8, wherein the realm block (RB) is stored inside the secure device (HSM).

10. Method according to claim 1, where said secure blocks (SSB) are protected by at least two symmetrical keys, an encryption key and an integrity key.

11. Method according to claim 10, wherein said encryption and integrity keys are diversified for each subjects as defined in the realm configuration (RC).

12. Method according to claim 1, wherein said secure blocks (SSB) are transient, generated on the fly according to the realm configuration (RC) and then deleted after use.

13. Method according to claim 1, wherein said secure device's algorithm (algorithm) deals with several sensitive resources of different kinds.

14. Secure device (HSM) adapted to handle sensitive resources and having a predetermined number of generic functions (GenF) and a realm configuration (RC), said realm configuration (RC) being intended to be used by said generic functions (GenF), said realm configuration (RC) describing:
- subjects (<who>, M, US),
- sensitive resources (<what>, CC_nb, PIN) associated to said subjects (<who>),
- actions (<action>) intended to be applied by subjects (<who>, M) on sensitive resources (<what>, CC_nb) and defined from said generic functions (GenF),
- authentication conditions (<how>) associated to said actions (<action>) and to be validated using a secure device's algorithm (algorithm) dealing with at least one sensitive resource(<what>, PIN),
said actions (<action>) enforcing sensitive resources (<what>, CC_nb) to be handled on behalf of subjects (<who>, M) only in case said authentication conditions (<how>) are fulfilled,
said secure device (HSM) handling sensitive resources (<what>) stored outside the secure device (HSM) in secure blocks (SSB) created, updated and accessed by the secure device (HSM) and protected by a secret key of the secure device (HSM), said handling of sensitive resources (<what>) being processed by the secure device (HSM) on behalf of subjects (<who>) only using generic functions (GenF) according to the realm configuration (RC) under authentication conditions (<how>).
